# EUROPÄISCHE PATENTSCHRIFT

(11) **EP 3 426 424 B1**
(45) Veröffentlichungstag und Bekanntmachung des Hinweises auf die Patenterteilung: **21.07.2021**
(21) Anmeldenummer: 17710475.9
(22) Anmeldetag: 07.03.2017
(51) Int. Cl.: B22D 19/00, B22D 19/04, B21C 37/00

(54) **VERFAHREN ZUM HERSTELLEN EINES METALLISCHEN GUSSTEILS, INSBESONDERE EINES GEHÄUSES EINES ELEKTROMOTOR-STATORS, EINES GEHÄUSES FÜR BAUTEILE DER LEISTUNGSELEKTRONIK, EINES BATTERIETROGES ODER EINES BATTERIEGEHÄUSES, MIT DEM VERFAHREN HERGESTELLTES GUSSTEIL UND VERWENDUNG EINES DURCH WALZSCHWEISSEN HERGESTELLTEN KÜHLKANALS**
METHOD FOR PRODUCING A CAST METAL PART, IN PARTICULAR A HOUSING OF AN ELECTRIC MOTOR STATOR, A HOUSING FOR COMPONENTS OF POWER ELECTRONICS, A BATTERY TRAY OR A BATTERY HOUSING, CAST PART PRODUCED USING THE METHOD, AND USE OF A COOLING CHANNEL PRODUCED BY ROLL WELDING
PROCÉDÉ DE FABRICATION D'UNE PIÈCE COULÉE MÉTALLIQUE, NOTAMMENT UN BOÎTIER D'UN STATOR DE MOTEUR ÉLECTRIQUE, UN BOÎTIER POUR COMPOSANTS D'ÉLECTRONIQUE DE PUISSANCE, UN COFFRE DE BATTERIE OU BOÎTIER DE BATTERIE, PIÈCE COULÉE MÉTALLIQUE FABRIQUÉE SELON LE PROCÉDÉ ET UTILISATION D'UN CANAL DE REFROIDISSEMENT FABRIQUÉ PAR SOUDURE DE LAMINAGE

(30) Priorität: 07.03.2016 DE 102016002791
(43) Veröffentlichungstag der Anmeldung: 16.01.2019
(73) Patentinhaber: Aionacast Consulting GmbH, 71665 Vaihingen an der Enz (DE)
(72) Erfinder: POHL, Jürgen, 71665 Vaihingen an der Enz (DE)
(74) Vertreter: Leinweber & Zimmermann
(86) Internationale Anmeldenummer: PCT/EP2017/000304
(87) Internationale Veröffentlichungsnummer: WO 2017/153045

(56) Entgegenhaltungen:
- EP-B1- 0 858 692
- WO-A1-2008/028669
- DE-A1-102007 056 995
- GB-A- 2 047 587
- JOE OLSON ET AL: "Comparison and Tube Welding Processes for Tube & Pipe", SAE TECHNICAL PAPER SERIES, SOCIETY OF AUTOMOTIVE ENGINEERS, WARRENDALE, PA, US, 1. Januar 1990 (1990-01-01), Seite 13pp, XP009194020, ISSN: 0148-7191

## Beschreibung

Die Erfindung betrifft ein Verfahren zum Herstellen eines metallischen Gussteils, insbesondere eines Gehäuses eines Elektromotor-Stators, eines Gehäuses für Bauteile der Leistungselektronik, eines Batterietroges oder eines Batteriegehäuses, mit folgenden Schritten: Herstellen eines Kühlkanals, Einbringen des Kühlkanals in ein Gießwerkzeug, Füllen des Gießwerkzeugs mit Gießwerkstoff und Ausformen des Gussteils.

Verfahren der oben genannten Art sind bekannt. Bei den bekannten Verfahren wird der in das Gießwerkzeug einzubringende Kühlkanal beispielsweise durch Strangpressen in Form eines nahtlosen Rohres hergestellt. Ein solches Verfahren ist sehr aufwendig. Darüber hinaus ist es schwierig, stranggepresste Rohre derart umzuformen, dass sie einer durch die Form des herzustellenden Gussteils vorgegebenen Bahn folgen. Schließlich ist es im Wege des Strangpressens nicht möglich, einen Kühlkanal mit Verzweigungen herzustellen.

Grundsätzlich ist es auch denkbar, den in das Gießwerkzeug einzulegenden Kühlkanal mit einem Schweißverfahren herzustellen, bei dem das entsprechende Rohmaterial entlang einer oder zwei Schweißnähten unter Verwendung eines Zusatzwerkstoffs verschweißt wird. Insbesondere wegen des üblicherweise dabei verwendeten Zusatzwerkstoffs liegt dabei aber im Bereich der Schweißnaht ein anderes Gefüge bzw. eine andere chemische Zusammensetzung als in anderen Bereichen des Kühlkanals vor, so dass bei Erwärmung während des Füllens des Gießwerkzeugs eine unerwünschte und nicht steuerbare Verformung des Kühlkanals eintritt. Wie bei der Verwendung stranggepresster Rohre als Kühlkanal besteht darüber hinaus auch bei den wie oben beschrieben geschweißten Rohren das Problem, dass es nicht oder nur mit erheblichem Aufwand möglich ist, einen Kühlkanal mit Verzweigungen herzustellen.

Aus der EP 0 858 692 B1 ist ein Verfahren zum Herstellen eines metallischen Gussteils nach dem Oberbegriff von Anspruch 1 bekannt. Danach sind die als Kühlkanal verwendeten Rohre vorzugsweise aus Stahl oder Stahllegierungen. Solcherlei Rohre haben eine große Steifigkeit. Es ist daher schwierig, sie derart umzuformen, dass sie einer durch die Form des herzustellenden Gussteils vorgegebenen Bahn folgen. Auch ist es schwierig oder gar unmöglich, aus solchen Rohren einen Kühlkanal mit Verzweigungen herzustellen. Die Rohre haben einen höheren Schmelzpunkt als das Gussmaterial und werden vorgewärmt in der Gussform platziert.

Die DE 2 227 427 A beschreibt die Herstellung eines Kühlkanals durch Walzschweißen, wobei Reinaluminium als zu verwendendes Material angegeben ist. Der so hergestellte Kühlkanal wird mit anderen gleichartigen Kanälen zu einem Wärmetauscher kombiniert. DE 10 2007 056995 offenbart Fluidverteilungselemente und ein Herstellungsverfahren für selbige, wobei diese Elemente sehr flexibel in ihrer Gestalt sein können.

Angesichts der obigen Probleme liegt der Erfindung die Aufgabe zugrunde, das Verfahren der eingangs genannten Art derart weiterzubilden, dass die Flexibilität bei der Gestaltung des Kühlkanals, insbesondere im Hinblick beispielsweise auf Abzweigungen, erhöht ist und unerwünschte Verformungen vermieden werden. Ferner soll das Verfahren einfach auszuführen sein.

Erfindungsgemäß wird die gestellte Aufgabe mit dem Verfahren nach Anspruch 1 gelöst.

Dabei liegt der Erfindung die Erkenntnis zugrunde, dass das Walzschweißen ohne Probleme auch für sich verzweigende Kühlkanäle verwendet werden kann. Ferner kommt es ohne Zusatzwerkstoffe aus, weshalb unerwünschte Verformungen beispielsweise aufgrund thermischer Spannungen vermieden sind. Schließlich ist es besonders einfach durchzuführen und der mittels des Walzschweißens hergestellte Kühlkanal bedarf nur weniger Verformungen zur Anpassung an den durch die Gestalt des Gussteils vorgegebenen Verlauf.

Erfindungsgemäß beinhaltet das Verfahren zum Herstellen des Kühlkanals folgende Schritte:
a) Bereitstellen von zwei Blechen,
b) Aufbringen eines Trennmittels in mindestens einem Bereich der Bleche,
c) Erhitzen der Bleche,
d) Walzschweißen der Bleche und
e) Beaufschlagen mit Druck, so dass sich in dem mit dem Trennmittel versehenen Bereich ein Kanal bildet,
wobei die Schritte b)und c) auch gleichzeitig oder in umgekehrter Reihenfolge ausgeführt werden können.

Nach der Erfindung wird der Kühlkanal also zunächst in Form eines flächigen Gebildes hergestellt, wodurch es besonders einfach ist, beliebig vorgegebene Kanalbahnen zu realisieren, einschließlich Verzweigungen. Bei dem Trennmittel kann es sich um ein Graphittrennmittel handeln.

Erfindungsgemäß wird beim Beaufschlagen mit Druck zur Ausbildung des Kanals mindestens ein Widerlager derart angeordnet, dass die Außenhaut des Kanals daran anschlägt und so einen dem Widerlager entsprechenden Verlauf annimmt.

Dadurch kann der Querschnitt des Kanals vorgegeben werden. Bei geeigneter Ausbildung des Widerlagers kann der Querschnitt sich auch über die Länge des Kanals ändern.

Erfindungsgemäß bevorzugt ist der Schritt des Ausstanzens des Blechpakets vorgesehen. Dadurch kann die Menge des einzugießenden Blechmaterials verringert oder gar minimiert werden.

Erfindungsgemäß weiter bevorzugt ist vorgesehen, dass beim Ausstanzen mindestens ein Kernlager und/oder mindestens ein Abstandshalter und/oder mindestens eine Befestigungslasche gebildet wird/werden.

Mit anderen Worten nutzt diese Ausgestaltung der Erfindung die Möglichkeit, Kernlager, Abstandshalter und/oder Befestigungslaschen einstückig mit dem Kühlkanal herzustellen, was das Gesamtherstellungsverfahren des Gussteils vereinfacht.

Nach einer weiter bevorzugten Ausführungsform der Erfindung ist vorgesehen, dass der Kühlkanal vor dem Einbringen oder während des Einbringens in das Gießwerkzeug in eine vorgegebene Gestalt gebracht wird, insbesondere in die Gestalt einer Rinne.

Mit anderen Worten wird nach dieser Ausgestaltung das zunächst flächig hergestellte Gebilde zu einer Rinne gebogen, um es der beispielsweise rinnenförmigen Gestalt des herzustellenden Gussteils anzupassen.

Das Ausgießen des Gießwerkzeugs erfolgt erfindungsgemäß bevorzugt nach Art des Sandgusses oder des Kokillengusses einschließlich aller Unterarten, wie etwa Niederdruckkokillenguss, Schwerkraftkokillenguss, Kippkokillenguss etc. Es können auch andere Gießverfahren angewendet werden, sofern sichergestellt ist, dass das verwendete Verfahren den vorher in das Gießwerkzeug eingebrachten Kühlkanal nicht beeinträchtigt.

Erfindungsgemäß weiter bevorzugt ist vorgesehen, dass mindestens eines der Bleche und/oder der Gießwerkstoff ein Leichtmetall oder eine Leichtmetall-Legierung enthalten/enthält. Beispiele dafür sind Aluminium und Magnesium sowie deren Legierungen. Für das Blech/die Bleche kommt insbesondere sehr weiches Aluminium in Betracht, z.B. Dehngrenze R_{P, 0, 2} EN AW-1050A ca 40 N/mm²; siehe DIN EN 485-2. Der für das Blech/die Bleche verwendete Werkstoff muss beim Beaufschlagen mit Druck mit Hilfe gasförmiger Medien weich genug sein, so dass eine den Kanal ausbildende Verformung eintritt.

Als vorteilhaft kann dabei erfindungsgemäß insbesondere vorgesehen sein, dass der Schmelzbereich der Bleche höher ist als der des Gießwerkstoffs. Dadurch kann durch geeignete Einstellung der Gießtemperatur vermieden werden, dass der Kühlkanal während des Gießens beeinträchtigt wird.

Zusätzlich oder alternativ kann es erfindungsgemäß vorgesehen sein, dass der Kühlkanal vor und/oder während des Füllens des Gießwerkzeuges gekühlt wird. Auch dadurch kann nämlich verhindert werden, dass der in das Gießwerkzeug eingebrachte Kühlkanal wegen der hohen Temperatur des Gießwerkstoffes beim Ausgießen des Gießwerkzeugs Schaden nimmt.

Darüber hinaus kann ein beispielsweise auf ca. 300° C bis 400° C vorgeheizter Kühlkanal das Aufschmelzen einer sehr dünnen Grenzschicht begünstigen und somit die effektive Kontaktfläche vergrößern.

Nach einer weiter bevorzugten Ausführungsform der Erfindung ist vorgesehen, dass die äußere Oberfläche des Kühlkanals beschichtet wird. Auf diese Weise kann eine Verbesserung der Grenzschicht erzielt werden. Einschlägig geeignete Verfahren sind beispielsweise Feuerverzinken und eine elektrolytische Beschichtung mit den Basisstoffen Zink, Magnesium, Mangan und/oder Titanzirkonium.

Das Beschichten kann vor dem Walzschweißen an den dazu verwendeten Blechen erfolgen, oder auch danach, jedoch vor dem Füllen des Gießwerkzeugs mit Gießwerkstoff.

Weiter erfindungsgemäß bevorzugt kann vorgesehen sein, dass das Gießwerkzeug während des Gießvorgangs mit Ultraschall beaufschlagt wird. Auch diese Maßnahme dient zur Verbesserung der Grenzschicht.

Als vorteilhaft kann weiterhin erfindungsgemäß eine Wärmebehandlung des Kühlkanals vorgesehen sein. Sie erfolgt bevorzugt nach dem Beaufschlagen der beiden walzverschweißten Bleche mit Druck zur Ausbildung des Kühlkanals. Die Wärmebehandlung kann die Zugfestigkeit des Kühlkanals positiv beeinflussen. Sie kann beispielsweise bei einer Temperatur von 320°C bis 350°C für 0,5 Stunden bis 2 Stunden erfolgen, gefolgt von einem Abkühlen.

Nach einer besonders bevorzugten Ausführungsform der Erfindung ist vorgesehen, dass mindestens eine Oberfläche mindestens eines der Bleche vor dem Füllen des Gießwerkzeugs aufgeraut wird, insbesondere durch Verwendung einer profilierten Walze beim Walzschweißen oder durch Strahlen des Blechs/der Bleche mit Sand oder mit Edelstahlgranulat. Dadurch kann eine bessere Formfüllung mit dem Gießmaterial erreicht werden.

Nach einer weiter bevorzugten Ausführungsform kann vorgesehen sein, dass der Kühlkanal während des Gießvorgangs innen mit Druck beaufschlagt wird. Auf diese Weise können weiter eventuelle Beeinträchtigungen des Kühlkanals während des Gießvorgangs vermieden werden.

Im Folgenden ist die Erfindung anhand eines bevorzugten Ausführungsbeispiels unter Bezugnahme auf die beiliegende Zeichnung mit weiteren Einzelheiten näher erläutert. Dabei zeigen
- die Figuren 1 und 2: schematisch einzelne Schritte eines bevorzugten Ausführungsbeispiels des erfindungsgemäßen Herstellungsverfahrens,
- Figur 3: ein Blechpaket, das das Ergebnis des Herstellungsschrittes nach Figur 2(c) darstellt,
- Figur 4: eine schematische Schnittansicht einer bei dem beschriebenen Ausführungsbeispiel des Herstellungsverfahrens verwendeten Gießvorrichtung und
- Figur 5: schematisch eine Querschnittsansicht eines erfindungsgemäßen Gussteils.

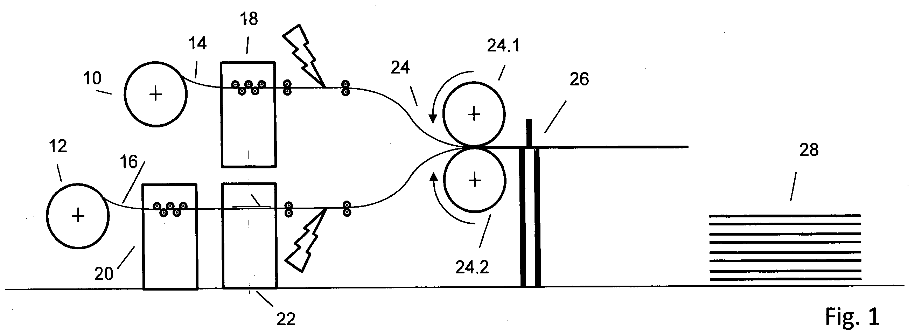

Figur 1 zeigt zwei Coils 10, 12 von Blech 14 bzw. 16. Die Bleche 14, 16 sind aus Leichtmetall, wie etwa Aluminium, oder eine Aluminiumlegierung. Nach dem Abwickeln von den Coils 10, 12 passieren die Bleche 14, 16 Rollenrichtmaschinen 18 bzw. 20. Das Blech 16 passiert nach der Rollenrichtmaschine 20 eine Station 22 zum Aufbringen eines Trennmittels. Dabei wird das Trennmittel in Gestalt eines Musters aufgebracht, das dem später auszubildenden Kühlkanal entspricht.

Das Blech 14 wird nach Passieren der Rollenrichtmaschine 18 erhitzt. Das gleiche gilt für das Blech 16 nach Passieren der Station 22. Die erhitzten Bleche 14, 16 werden dann gemeinsam einer Walzschweißeinrichtung 24 mit zwei Schweißwalzen 24.1 und 24.2 zugeführt, in der sie durch Walzschweißen miteinander verschweißt werden. Das Verschweißen findet dabei nur in Bereichen statt, die nicht mit Trennmittel versehen sind. Danach erfolgt ein Schneiden auf Länge in einer Schneideinrichtung 26. Die auf Länge geschnittenen walzverschweißten Blechpakete werden danach zu einem Stapel 28 aufgestapelt. Die Schweißwalzen 24.1 und 24.2 sind profiliert, so dass das Walzen die Oberflächen der Bleche 14, 16 aufraut.

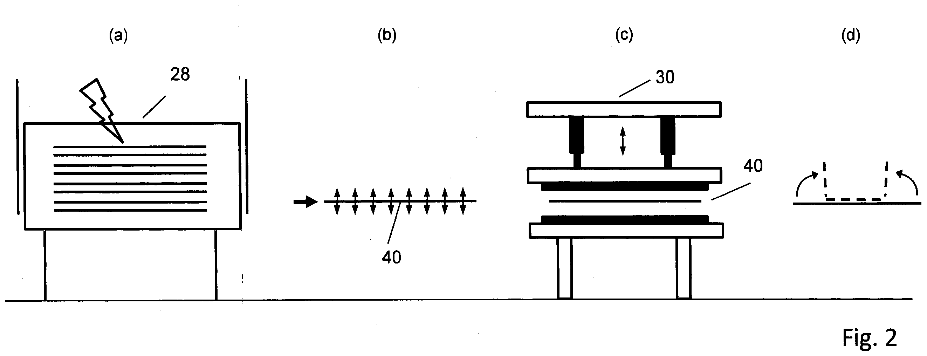

Wie Figur 2(a) zu entnehmen ist, wird der Stapel 28 geglüht. Danach erfolgt gemäß Figur 2(b) ein Aufblasen. Dabei wird Pressluft zwischen die beiden Bleche der Blechpakete eingeblasen, und zwar dort, wo sie wegen des Trennmittels nicht miteinander verschweißt sind. Anstelle von Pressluft können auch andere Druckmedien verwendet werden. Durch das Aufblasen entfernen sich die beiden Bleche in dem mit dem Trennmittel versehenen Bereich voneinander, so dass dazwischen ein Hohlraum entsteht. Dieser Hohlraum entsteht entsprechend demselben Muster wie das auf das Blech 16 aufgebrachte Trennmittel und bildet so einen Kanal.

Wenngleich dies in Figur 2(b) nicht gezeigt ist, kann auf einer oder auf beiden Seiten des auszubildenden Kanals während des Aufblasens ein ein Widerlager darstellendes Formwerkzeug angeordnet werden, das dem sich durch das Aufblasen ausbildenden Kanal eine Gestaltung vorgibt. Dabei handelt es sich insbesondere um eine Gestaltung, die von der kreisrunden Querschnittsfläche abweicht.

Überdies kann durch geeignete Anwendung und Ausgestaltung eines oder mehrerer Formwerkzeuge auch erreicht werden, dass der Querschnitt des durch Aufblasen entstehenden Kanals über seine Länge nicht konstant ist, sondern vielmehr beispielsweise stetig zu- oder abnimmt. Dadurch kann eine Feinjustierung der Kühlkapazität des herzustellenden Kanals erzielt werden.

Figur 2(c) zeigt eine Stanze, mittels derer das in der Station nach Figur 2(b) aufgeblasene Blechpaket ausgestanzt wird.

Das ausgestanzte Blechpaket wird sodann gemäß Figur 2(d) zu einer Rinne geformt.

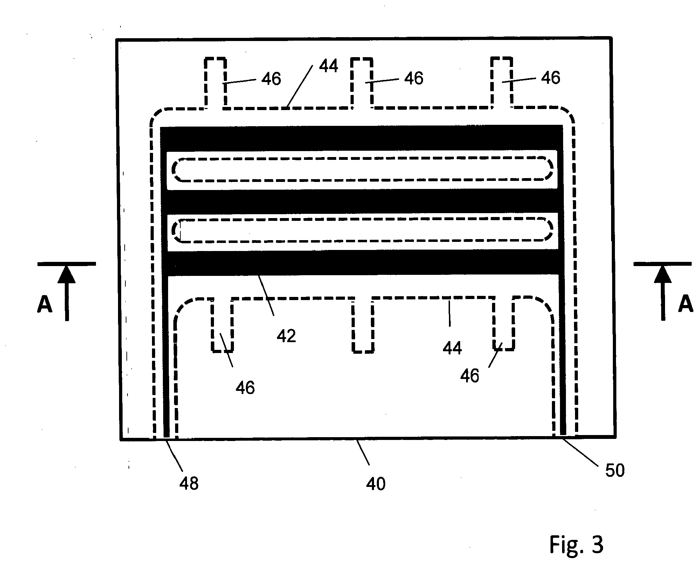

Figur 3 zeigt ein aus zwei Blechen zusammengesetztes Blechpaket 40, wie es nach dem Aufblasen gemäß Figur 2(b) der Stanze 30 nach Figur 2(c) zugeführt wird. Man erkennt einen in Form eines verzweigten Kanals 42 ausgebildeten aufgeblasenen Bereich. Der Kanal 42 ist ein Ausführungsbeispiel für den erfindungsgemäßen Kühlkanal.

Mit der gestrichelten Linie 44 in Figur 3 ist die Stanzkontur angedeutet, entlang derer in der Stanze 30 das Blechpaket 40 ausgestanzt wird. Durch das Ausstanzen entstehen Positionierhilfen bzw. Kernlager 46.

In Figur 3 ist ein Kühlmittelzulauf mit der Bezugszahl 48 bezeichnet, ein Kühlmittelauslauf mit der Bezugszahl 50.

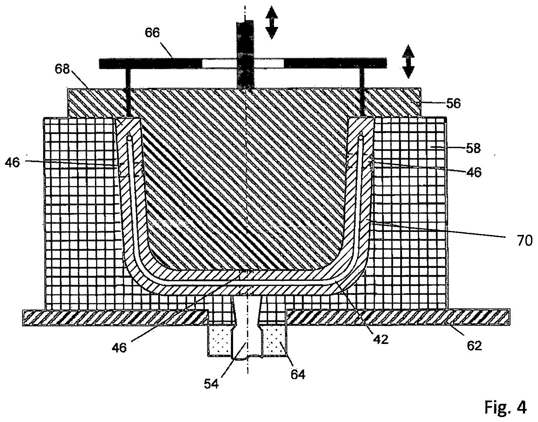

Figur 4 zeigt das Blechpaket 40 in einer Gießvorrichtung, mit der ein Niederdruckkokillenguss zur Herstellung eines Gussteils 70 in Form eines Batterietroges mit dem Kühlkanal 42 erfolgt. Man erkennt einen Einguss 54, einen Oberkern 56, einen Unterkern, eine Maschinenplatte 62, einen Isoliereinsatz 64 und eine Auswerfplatte 66 mit Auswerfern. Das Niederdruckkokillengießen erfolgt mit der beschriebenen Gießvorrichtung wie folgt:
Als erstes wird das Blechpaket 40 mit dem Kühlkanal 42 eingelegt. Dann wird der Oberkern 56 eingefahren. Danach erfolgt der Druckaufbau bzw. der Abguss, wobei Leichtmetall 68 wie beispielsweise Aluminium oder eine Aluminiumlegierung durch den Einguss 54 eingebracht wird. Währenddessen wird der Kühlkanal 42 gekühlt. Das Leichtmetall 68 hat einen niedrigeren Schmelzbereich als die Bleche 14, 16.

Nach der Erstarrung des Leichtmetalls 68 wird der Druck abgelassen, und der Oberkern 56 mit dem fertigen Gussteil wird hochgefahren. Daraufhin werden die Auswerfer der Auswerferplatte 66 ausgefahren und das fertige Gussteil wird entnommen.

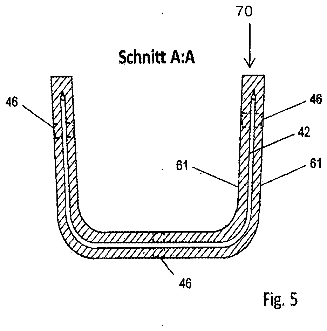

Figur 5 zeigt eine Querschnittansicht des nach dem oben beschriebenen Verfahren gezeigten Gussteils 70, bei dem es sich in dem dargestellten Ausführungsbeispiel um einen Batterietrog handelt. Der Kühlkanal 42 ist in der Darstellung nach Figur 4 länglich und erstreckt sich in der Mitte zwischen den beiden Wandoberflächen 60 und 61.

Bei dem erfindungsgemäß hergestellten Gussteil kann es sich nicht nur um einen Batterietrog handeln, sondern auch um andere kühlungsbedürftige Bauelemente, wie etwa ein Gehäuse eines Elektromotor-Stators oder ein Batteriegehäuse oder um ein Gehäuse für Bauteile der Leistungselektronik. Dabei liegt das Hauptaugenmerk auf Bauelementen für mobile Anwendungen, beispielsweise in Fahrzeugen, insbesondere Landfahrzeugen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein, in Rahmen des Gegenstands gemäß der Ansprüche 1 bis 13.

## Patentansprüche

1. Verfahren zum Herstellen eines metallischen Gussteils (70), insbesondere eines Gehäuses eines Elektromotor-Stators, eines Gehäuses für Bauteile der Leistungselektronik, eines Batterietroges oder eines Batteriegehäuses, mit folgenden Schritten:
Herstellen eines Kühlkanals (42),
Einbringen des Kühlkanals in ein Gießwerkzeug (56, 58),
Füllen des Gießwerkzeugs mit Gießwerkstoff (68) und
Ausformen des Gussteils,
**dadurch gekennzeichnet, dass**
das Herstellen des Kühlkanals (42) folgende Schritte beinhaltet:
a) Bereitstellen von zwei Blechen (14, 16),
b) Aufbringen eines Trennmittels in mindestens einem Bereich der Bleche,
c) Erhitzen der Bleche,
d) Walzschweißen der Bleche und
e) Beaufschlagen mit Druck, so dass sich in dem mit dem Trennmittel versehenen Bereich ein Kanal (42) bildet,
wobei die Schritte b) und c) auch gleichzeitig oder in umgekehrter Reihenfolge ausgeführt werden können und wobei
beim Beaufschlagen mit Druck zur Ausbildung des Kanals (42) mindestens ein Widerlager derart angeordnet wird, dass die Außenhaut des Kanals daran anschlägt und so einen dem Widerlager entsprechenden Verlauf annimmt.

2. Verfahren nach Anspruch 1, **gekennzeichnet durch** den Schritt des Ausstanzens der Bleche (14, 16) nach dem Beaufschlagen mit Druck.

3. Verfahren nach Anspruch 2, **dadurch gekennzeichnet, dass** beim Ausstanzen mindestens ein Kernlager (46) und/oder mindestens ein Abstandshalter und/oder mindestens eine Befestigungslasche gebildet wird/werden.

4. Verfahren nach einem der vorangehenden Ansprüche, **dadurch gekennzeichnet, dass** der Kühlkanal (42) vor dem Einbringen oder während des Einbringens in das Gießwerkzeug (56, 58) in eine vorgegebene Gestalt gebracht wird, insbesondere in die Gestalt einer Rinne.

5. Verfahren nach einem der vorangehenden Ansprüche, **dadurch gekennzeichnet, dass** das Ausgießen des Gießwerkzeugs (56, 58) nach Art des Kokillengusses oder des Sandgusses erfolgt.

6. Verfahren nach einem der vorangehenden Ansprüche, **dadurch gekennzeichnet, dass** mindestens eines der Bleche (14, 16) und/oder der Gießwerkstoff (68) ein Leichtmetall oder eine Leichtmetall-Legierung enthalten/enthält.

7. Verfahren nach einem der vorangehenden Ansprüche, **dadurch gekennzeichnet, dass** der Schmelzbereich der Bleche (14, 16) höher ist als der des Gießwerkstoffs (68).

8. Verfahren nach einem der vorangehenden Ansprüche, **dadurch gekennzeichnet, dass** der Kühlkanal (42) vor und/oder während des Füllens des Gießwerkzeugs (56, 58) gekühlt wird.

9. Verfahren nach einem der vorangehenden Ansprüche, **dadurch gekennzeichnet, dass** die äußere Oberfläche des Kühlkanals beschichtet wird.

10. Verfahren nach einem der vorangehenden Ansprüche, **dadurch gekennzeichnet, dass** das Gießwerkzeug (56, 58) während des Gießvorgangs mit Ultraschall beaufschlagt wird.

11. Verfahren nach einem der vorangehenden Ansprüche, **gekennzeichnet durch** eine Wärmebehandlung des Kühlkanals (42) nach dem Beaufschlagen der Bleche (14, 16) mit Druck.

12. Verfahren nach einem der vorangehenden Ansprüche, **dadurch gekennzeichnet, dass** mindestens eine Oberfläche mindestens eines der Bleche (16, 18) vor dem Füllen des Gießwerkzeugs (56, 58) so aufgeraut wird, insbesondere durch Verwendung einer profilierten Walze (24.1, 24.2) beim Walzschweißen oder durch Strahlen des Blechs/der Bleche (16, 18).

13. Verfahren nach einem der vorangehenden Ansprüche, **dadurch gekennzeichnet, dass** der Kühlkanal (42) während des Gießvorgangs innen mit Druck beaufschlagt wird.

## Claims

1. A method for producing a cast metal part (70), in particular a housing of an electric motor stator, a housing for power electronics components, a battery tray or a battery housing, comprising the following steps:
producing a cooling channel (42),
introducing the cooling channel into a casting tool (56, 58),
filling the casting tool with a casting material (68), and
unmoulding the cast part,
**characterised in that**
said producing of the cooling channel (42) includes the following steps:
a) providing two metal sheets (14, 16),
b) applying a release agent to at least one area of the sheets,
c) heating the sheets,
d) roll welding the sheets, and
e) applying pressure such that a channel (42) is formed in the area provided with the release agent,
wherein steps b) and c) can also be performed simultaneously or in reverse order, and
wherein when pressure is applied to form the channel (42) at least one abutment is arranged such that the outer skin of the channel abuts against it and thus assumes a profile corresponding to the abutment.

2. The method according to claim 1, **characterised by** the step of punching the sheets (14, 16) after the application of pressure.

3. The method according to claim 2, **characterised in that** during punching at least one core bearing (46) and/or at least one spacer and/or at least one fastening tab is/are formed.

4. The method according to one of the preceding claims, **characterised in that** the cooling channel (42) is brought into a predetermined shape, in particular into the shape of a groove, prior to introduction or during introduction into the casting tool (56, 58).

5. The method according to one of the preceding claims, **characterised in that** the filling of the casting tool (56, 58) takes place in the form of chill casting or sand casting.

6. The method according to one of the preceding claims, **characterised in that** at least one of the sheets (14, 16) and/or the casting material (68) contain(s) a light metal or a light metal alloy.

7. The method according to one of the preceding claims, **characterised in that** the melting range of the sheets (14, 16) is higher than that of the casting material (68).

8. The method according to one of the preceding claims, **characterised in that** the cooling channel (42) is cooled before and/or during the filling of the casting tool (56, 58).

9. The method according to one of the preceding claims, **characterised in that** the outer surface of the cooling channel is coated.

10. The method according to one of the preceding claims, **characterised in that** the casting tool (56, 58) is subjected to ultrasound during the casting process.

11. The method according to one of the preceding claims, **characterised by** a heat treatment of the cooling channel (42) after application of pressure to the sheets (14, 16).

12. The method according to one of the preceding claims, **characterised in that** at least one surface of at least one of the sheets (16, 18) is roughened prior to filling the casting tool (56, 58), in particular by using a profiled roll (24.1, 24.2) during roll welding or by blasting the sheet(s) (16, 18).

13. The method according to one of the preceding claims, **characterised in that** the cooling channel (42) is pressurised internally during the casting process.

## Revendications

1. Procédé de fabrication d'une pièce coulée métallique (70), notamment un boîtier d'un stator de moteur électrique, un boîtier pour composants d'électronique de puissance, un bac de batterie ou un boîtier de batterie, comportant les étapes suivantes consistant à :
fabriquer un canal de refroidissement (42),
introduire le canal de refroidissement dans un outil de coulée (56, 58),
remplir l'outil de coulée d'un matériau de coulée (68), et
démouler la pièce coulée,
**caractérisé en ce que**
la fabrication du canal de refroidissement (42) comprend les étapes suivantes consistant à :
a) fournir deux tôles (14, 16),
b) appliquer un agent de démoulage dans au moins une zone des tôles,
c) chauffer les tôles,
d) effectuer un soudage par laminage sur les tôles, et
e) appliquer une pression de manière à former un canal (42) dans la zone pourvue de l'agent de démoulage,
étant entendu que les étapes b) et c) peuvent également être réalisées simultanément ou en ordre inversé et que
lors de l'application de la pression visant à former ledit canal (42), au moins un sabot est agencé de manière que la peau extérieure du canal y vienne en butée et prenne ainsi une configuration correspondant audit sabot.

2. Procédé selon la revendication 1, **caractérisé par** l'étape consistant à estamper les tôles (14, 16) après l'application de la pression.

3. Procédé selon la revendication 2, **caractérisé en ce que** l'estampage donne lieu à la formation d'au moins un support de noyau (46) et/ou au moins un séparateur et/ou au moins une bride de fixation.

4. Procédé selon l'une des revendications précédentes, **caractérisé en ce que** le canal de refroidissement (42) est façonné selon une forme prédéterminée avant ou pendant son introduction dans l'outil de coulée (56, 58), notamment selon une forme de rigole.

5. Procédé selon l'une des revendications précédentes, **caractérisé en ce que** le garnissage de l'outil de coulée (56, 58) s'effectue à la manière de la coulée en coquilles ou de la coulée au sable.

6. Procédé selon l'une des revendications précédentes, **caractérisé en ce qu'**au moins une des tôles (14, 16) et/ou le matériau de coulée (68) contiennent un métal léger ou un alliage de métaux légers.

7. Procédé selon l'une des revendications précédentes, **caractérisé en ce que** la plage de fusion des tôles (14, 16) est supérieure à celle du matériau de coulée (68).

8. Procédé selon l'une des revendications précédentes, **caractérisé en ce que** le canal de refroidissement (42) est refroidi avant et/ou pendant le remplissage de l'outil de coulée (56, 58).

9. Procédé selon l'une des revendications précédentes, **caractérisé en ce que** la surface extérieure du canal de refroidissement est revêtue.

10. Procédé selon l'une des revendications précédentes, **caractérisé en ce que** l'outil de coulée (56, 58) est soumis à des ultrasons pendant le processus de coulée.

11. Procédé selon l'une des revendications précédentes, **caractérisé par** un traitement thermique du canal de refroidissement (42) après l'application de pression sur les tôles (14, 16).

12. Procédé selon l'une des revendications précédentes, **caractérisé en ce qu'**au moins une surface d'au moins une des tôles (16, 18) est rugosifiée avant le remplissage de l'outil de coulée (56, 58), notamment au moyen d'un rouleau profilé (24.1, 24.2) lors du soudage par laminage, ou par grenaillage de la ou des tôles (16, 18).

13. Procédé selon l'une des revendications précédentes, **caractérisé en ce que** le canal de refroidissement (42) est soumis à une pression interne pendant le processus de coulée.
